# EUROPEAN PATENT SPECIFICATION

(11) **EP 2 476 184 B1**
(45) Date of publication and mention of the grant of the patent: **23.11.2016**
(21) Application number: 10815045.9
(22) Date of filing: 09.09.2010
(51) Int. Cl.: H02J 13/00, H02G 1/02, G01P 15/00

(54) **DEVICE, SYSTEM AND METHOD FOR MONITORING THE LINE SAG OF POWER LINES AND SUCH**
VORRICHTUNG, SYSTEM UND VERFAHREN ZUR ÜBERWACHUNG DES DURCHHÄNGENS VON STROMLEITUNGEN UND ÄHNLICHEM
DISPOSITIF, SYSTÈME ET PROCÉDÉ DE SURVEILLANCE DE LA FLÈCHE DE LIGNES ÉLECTRIQUES ET ANALOGUES

(30) Priority: 09.09.2009 FI 20095928
(43) Date of publication of application: 18.07.2012
(73) Proprietor: Teknologian tutkimuskeskus VTT Oy, 02150 Espoo (FI)
(72) Inventor: KÄNSÄLÄ, Klaus, FI-02044 VTT (FI); TUKEVA, Pirkka, F-02044 VTT (FI)
(74) Representative: Seppo Laine Oy
(86) International application number: PCT/FI2010/050695
(87) International publication number: WO 2011/030000

(56) References cited:
- JP-A- 2004 274 843
- JP-A- 2004 274 843
- US-A- 5 454 272
- US-A1- 2008 246 507
- US-A1- 2009 015 239
- US-B1- 6 205 867

## Description

The present invention relates to monitoring the status of objects, especially to monitoring of condition. The invention especially relates to automatic remote monitoring of objects. The object can be e.g. an electric line or other similar object.

Sagging of electric lines and stretching of cables cause problems when the cables sway and contact each other or various obstacles in the terrain. Because of this line sag must be constantly monitored and, when necessary, operations must be carried out to rectify the situation.

Monitoring of condition, service and maintenance of power grid and high voltage distribution network with current methods is very expensive and time-consuming, as the network is located on a geographically wide area, often without access roads. Thus, inspecting electric lines by visiting on the spot is labour-intensive. Traditionally, for example helicopters have been used for monitoring the condition of the lines, which is a very expensive solution and does not allow continuous condition monitoring of the lines.

There also is a known solution in which the tension of the electric cable is measured with a force sensor fastened between the cable and the pylon. Another known technique is to measure the inclination of the cable at a certain distance from the pylon. The measurement data allow determining e.g. excessive line sag of the cable. On the other hand it is known from JP 2004274843 A to equip electric power lines with acceleration sensors to monitor abnormal oscillation. The disadvantage of these is, however, the price of the technique or the fact that the cable will have to be removed from the pylon for the duration of the installation. Thus they are not well suited for monitoring the condition of wide networks or parts of network.

The purpose of the invention is to provide a novel apparatus and method especially for monitoring the condition of electric lines and networks. An especial purpose is to provide a solution having low costs, allowing reliable monitoring and being easy to retrofit.

The invention is based on the idea that the line sag of an electric line or other corresponding dynamic object is monitored by means of an apparatus arranged to measure the movement or change of the movement of the object, to derive a parameter describing the status of the object on the basis of the movement data and to further relay the parameter describing the status wirelessly from a data processing unit to outside the apparatus, for example to a control centre. The apparatus according to the invention can be fastened to the movable (dynamic) part of the object, such as an electric cable in the case of an electric line. In particular the apparatus contains an acceleration sensor, which recognizes movement or change of movement of the apparatus. The data processing unit of the apparatus calculates a period of swing based on the acceleration data measured by the acceleration sensor. Further based on the calculated period of swing the data processing unit calculates the vertical deviation of the movable object according to a mathematical pendulum formula of the movable object, whereby the vertical deviation is comparable to the sag of the movable object.

More specifically, the invention is characterized by what is disclosed in the characterizing parts of independent claims.

Preferably the object is an object behaving dynamically when influenced on by natural forces, such as an electric line in which a cable, hanging freely between the pylons, oscillates when influenced on by wind. Thus the line sag of the electric line or another comparable parameter can be defined by means of a simple measurement. For example, by measuring the period of swing of a single cable, it is possible to calculate the vertical deviation of the cable from horizontal describing the line sag of the cable using a kinematic or mathematic model.

The kinetic state of the object is preferably monitored by means of an acceleration sensor. Further, the data processing unit of the apparatus is arranged to calculate the period of swing based on the acceleration data measured by the acceleration sensor and/or the vertical deviation according to the pendulum model in the oscillating object. The magnitude of the period of swing and/or vertical deviation further allows determining, for example, whether the line sag of the electric line is excessive. On the other hand, measurement of the kinetic state can also indicate whether the line is contacting obstructions, such as fallen trees or branches or trees preventing normal oscillation of the line.

The system according to the invention for monitoring especially electric lines and other cell- or network-type objects comprises a control centre, a plurality of remote apparatuses of the kind described above fastened to the cells of the object or parts of the network for locally detecting their state and for wirelessly relaying condition information to the control centre.

In a method according to the invention the status of the cell- or network-type objects is monitored by measuring the kinetic state or change of kinetic state of the object, by deriving a parameter describing the state of the object on the basis of the measurement data and by relaying the parameter describing the status of the object at least partially wirelessly to the control centre.

The invention provides considerable advantages. The status data of the network available by means of the apparatus according to the invention makes it possible to predictively service the electric network and to flexibly monitor problematic points. By means of real-time monitoring that can further be carried out in a centralized way, the operational and service reliability of the electric network can be considerably increased. As the apparatus according to the invention can also be carried out with low costs and it reduces the need for manual monitoring, its economic effect is very considerable.

The apparatus can also be installed in a line without disconnecting the voltage during the installation, which considerably saves installation costs.

As a summary, it can be said that the invention differs from competing technologies in its cost efficiency and its easy installability.

In the following, the embodiments and additional advantages of the invention are described by means of reference to the appended drawings.
Figure 1 is a schematic illustration of an apparatus according to one embodiment of the invention.
Figure 2 is a side view of an electric line with condition monitoring apparatuses according to the invention installed between the pylons.
Figure 3 is an illustration of the operation principle of the invention according to one embodiment.
Figure 4 is a flow diagram of the main principle of the method according to the invention.

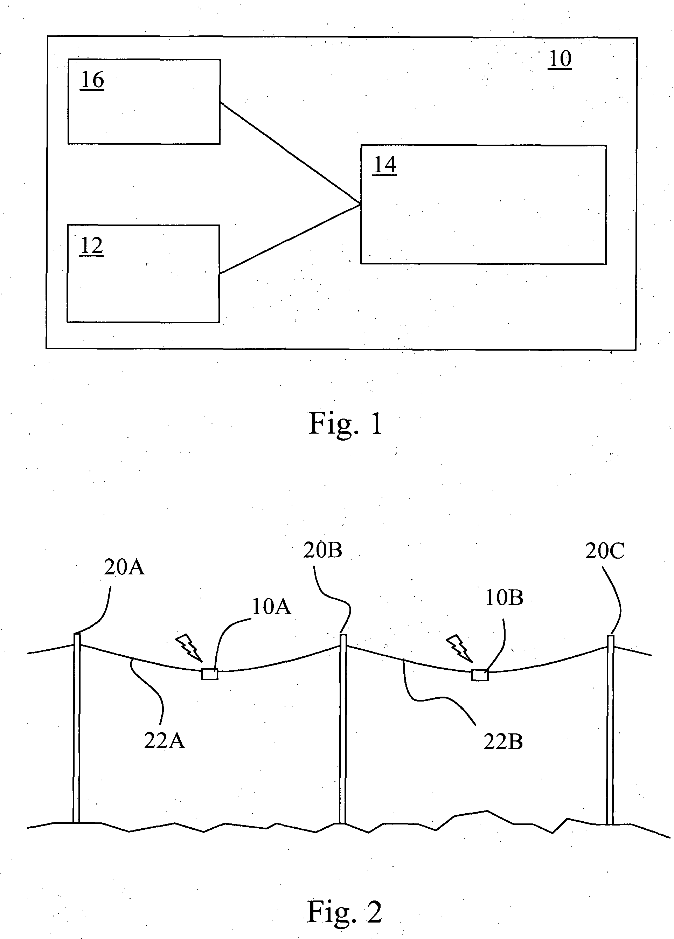

Figure 1 illustrates a remote monitoring apparatus 10 according to the invention comprising an acceleration sensor 12, a data processing unit 14 and a wireless communication unit 16 operationally connected to each other.

The apparatus 10 also preferably comprises a battery (not shown) from which the parts of the apparatus are supplied with power. According to an advantageous embodiment the apparatus further comprises means for charging the battery (not shown). Such charging means can include, for example, an inductive loop or a coil by means of which the charging power can be received from the electric line to which the apparatus is fastened. The use of the apparatus can sequenced so that the battery can be charged between usage periods. The apparatus can be activated e.g. on the basis of the acceleration sensor when the kinetic state of the line is sufficient for carrying out the measurement. Wind provides the excitation for the movement.

According to an alternative embodiment the charging means can comprise e.g. a solar panel or a wind generator.

Preferably the parts of the apparatus are enclosed as one weather-proof, integrated unit.

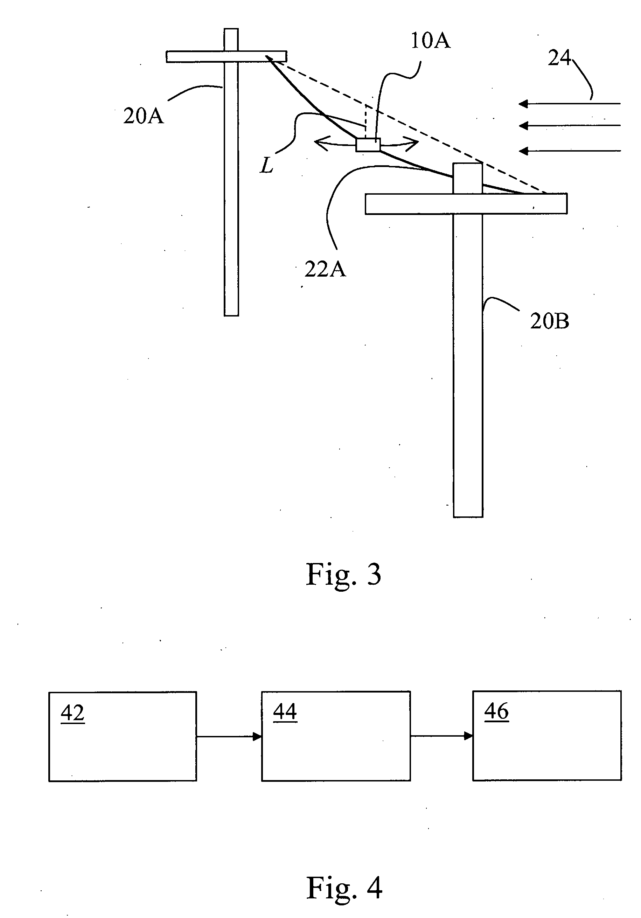

With reference to figures 2 and 3, according to one embodiment the apparatus 10A, 10B is designed to be fastened to an electric line. Thus its enclosure can comprise means for grabbing the air cable. The enclosure can comprise e.g. a cable channel, a pincher, a belt or the like for ensuring its reliable fastening to the cable. Preferably the grabbing means allows retrofitting the apparatus to an air cable without cutting the cable or removing it from the pylon.

In figures 2 and 3 the pylons are denoted by reference numerals 20A, 20B and 20C, while the air cables therebetween are denoted by reference numerals 22A and 22B. In order to monitor the condition of the electric line the acceleration sensor is arranged so that it detects essentially horizontal oscillation perpendicular to the electric line as shown in figure 3, because in this direction the oscillation of the cable 22A caused by the wind 24 is greatest and easiest to detect and model. In other words, the acceleration sensor is used for measuring transverse acceleration of the cable, from which the period of swing can then be derived. Vertical deviation (L) in relation to straight line can then be derived from this data using the mathematical pendulum formula.

The kinematic model of a sagging electric line can be simplified to conform to the behaviour of a mathematical pendulum by taking into account interference factors caused by air resistance, elasticity of the cable, location and suspension of the mass. Thus the vertical deviation from vertical (L). i.e. line sag, can be calculated e.g. as follows using a simple mathematical pendulum model: *L = g*(T*/*2)²*x,* where g is the acceleration of earth's gravity, *T* is period of swing, x is coefficient taking the interference factors into account.

Calculation of the period of swing and/or the vertical deviation on the basis of the measurement result is preferably carried out by means of the microprocessor in the data processing unit of the apparatus. However, it should be appreciated that at least a part of the calculations can be carried out in the control centre as well. Most preferably, however, at least period of swing is determined in the remote apparatus in order to minimize the data amount of the data transfer. The remote apparatus can be realized so that it sends data about the condition of the line to the control centre at certain time intervals, regardless of the condition of the line, or only if the parameter describing the condition exceeds a certain allowable value or range.

Figure 4 illustrates the basic principle of the condition monitoring according to the invention. At step 42, the kinetic state of the object is measured. At step 44, a parameter describing the condition of the object is derived on the basis of the measurement of kinetic state. At step 46 the parameter is wirelessly sent to the control centre. In the control centre, the condition of the whole electric network or a part thereof is monitored on the basis of the data relayed by the remote apparatuses.

The wireless connection can be realized with an operator network, such as a cellular phone network or a data communications network. According to another embodiment the connection is carried out by routing along the line via measurement devices. In this case the communication means of the apparatuses are arranged to communicate with another corresponding apparatus for relaying the parameter describing the condition of the apparatus in a chain from one apparatus to another corresponding apparatus, possibly all the way to the control centre. The system can also be realized as a combination of these such as first collecting the condition data of one branch of the network by routing to one apparatus further relaying the data to the control centre via the operator network.

As has become apparent from the above the invention is especially suited for monitoring the condition of electric networks and -lines. Other possible applications include other objects subjected to wind or other natural influences, such as various antennae and link pylons that can also be located at a geographically wide area.

According to one embodiment the line sag of the movable object, especially an electric line, is determined by means of independent position recognition or by means of the dynamic measurement described above. In the embodiment one axis of the 3D acceleration sensor is locked to be parallel with the electric line so that this known axis is always parallel with the cable. The means for fastening the sensor to the cable are known per se. The two other axes of the acceleration sensor are utilized for determining the rotation of the electric line occurring as the length of the line changes. The resultant of the rotation movement is used together with the third axis for estimating the line sag, whereby the first parameter is produced. In other words, the 3D acceleration movement is used for measuring the position, i.e. sag angle so that the direction of the acceleration component produced by the gravity of earth is determined from the measurement data produced by the sensor. The swing amplitude of a certain point between two pylons is measured by estimating the period of swing and acceleration produced by means of a 3D acceleration sensor connected to the line. A separate calculation model giving the second parameter is used for this estimate. A number of measurement apparatuses can be used simultaneously preferably with a wireless network, whereby reliability produced by redundancy is achieved. The wave form of the oscillation thereby produces the third estimate for the line sag analysis.

## Claims

1. An apparatus (10A, 10B) for monitoring sag of movable objects (22A, 22B), especially the electric lines of an electric network, the apparatus (10A, 10B) being fastenable to the object (22A, 22B) to be monitored and comprising:
- an acceleration sensor (12),
- a data processing unit (14) operationally connected to the acceleration sensor (12), and
- communication means for wirelessly relaying data from the data processing unit (14) to outside the apparatus (10A, 10B),
- the acceleration sensor (12) being arranged to recognize movement or change of movement of the apparatus (10A, 10B) and
- the data processing unit (14) being arranged to:
∘ derive a parameter describing the status of the object (22A, 22B) on the basis of the movement data obtained from the acceleration sensor (12), **characterized in that** the processing unit is further arranged to
∘ calculate a period of swing of the apparatus (10A, 10B) on the basis of the acceleration data measured by the acceleration sensor (12) and to
∘ calculate the vertical deviation of the movable object (22A, 22B) according to a mathematical pendulum formula of the movable object (22A, 22B), which vertical deviation is comparable to the sag of the movable object (22A, 22B).

2. An apparatus (10A, 10B) according to claim 1, **characterized in that** it is arranged to go into power-saving stand-by mode and to further wake up for carrying out the measurement at certain intervals or when the sensor detects a sufficient kinetic state.

3. An apparatus (10A, 10B) according to any of the preceding claims, **characterized in that** it comprises means for fastening the apparatus to the electric line.

4. An apparatus (10A, 10B) according to claim 2, **characterized in that** it comprises means for obtaining operation energy for the apparatus from the electric line, preferably inductively, and optionally also means for charging the operation energy.

5. An apparatus (10A, 10B) according to any of the preceding claims, **characterized in that** the communication means are arranged to use cellular phone network.

6. An apparatus (10A, 10B) according to any of the preceding claims, **characterized in that** the communication means are arranged to communicate with another corresponding apparatus for relaying the parameter describing the status of the object (22A, 22B) in a chain from one apparatus to another corresponding apparatus.

7. An apparatus (10A, 10B) according to any of the preceding claims, **characterized in that** the sensor is a 3D acceleration sensor (12) arranged to recognize the position of the apparatus so that the measurement data provided by the sensor is used for determining the direction of the acceleration component of the gravity of earth.

8. A system for monitoring sag of cell- or network-type objects (22A, 22B), such as electric lines, the system comprising
- a control centre,
- a plurality of remote apparatuses (10A, 10B) attached to the cells or parts of network of the object (22A, 22B) and arranged to locally monitor their state and to relay the condition data wirelessly to the control centre,
**characterized in that** apparatuses (10A, 10B) according to any of claim 1 to 7 are used as remote apparatuses.

9. A system according to claim 8, **characterized in that** the control centre comprises a database containing the geographical locations of the said plurality of the remote apparatuses.

10. A method of monitoring sag of cell- or network-type objects (22A, 22B), in which method
- measuring the kinetic state or change of kinetic state of the object (22A, 22B) by means of a remote apparatus (10A, 10B),
- deriving a parameter describing the state of the object (22A, 22B) on the basis of the measurement data,
- relaying the parameter describing the state of the object (22A, 22B) at least partly wirelessly to the control centre
**characterized in** using an apparatus (10A, 10B) according to any of claim 1 to 7 as the remote apparatus.

11. A method according to claim 10, **characterized in that**
- the remote apparatus (10A, 10B) is used for detecting the transverse acceleration of the electric line in wind,
- a parameter comparable to the line sag of the electric line is calculated on the basis of the transverse acceleration, and that
- the parameter comparable to the line sag is wirelessly relayed to the control centre.

12. A method according to claim 10 or 11, **characterized in that**
- a plurality of remote apparatuses (10A, 10B) arranged in different parts of the object (22A, 22B), such as a number of spaces between pylons, are used, and in
- relaying the parameter describing the state of the object (22A, 22B) from the said plurality of remote apparatuses to the control centre.

13. A method according to claim 10, 11 or 12, **characterized in** using 3D-acceleration measurement for measuring the position so that the direction of the acceleration component caused by the gravity of earth is determined from the measurement data produced by the sensor.

## Patentansprüche

1. Vorrichtung (10A, 10B) zur Überwachung des Durchhängens von beweglichen Objekten (22A, 22B), insbesondere von den elektrischen Leitungen eines elektrischen Netzwerkes, wobei die Vorrichtung (10A,10B) an dem zu überwachenden Objekt (22A,22B) befestigbar ist und aufweist:
- einen Beschleunigungssensor (12),
- eine Datenverarbeitungseinheit (14), die betriebsmäßig mit dem Beschleunigungssensor (12) verbunden ist, und
- Kommunikationsmittel, um Daten von der Datenverarbeitungseinheit (14) drahtlos nach außerhalb der Vorrichtung (10A,10B) weiterzuleiten,
- der Beschleunigungssensor (12) dazu eingerichtet ist, um Bewegung oder eine Veränderung der Bewegung der Vorrichtung (10A,10B) zu erkennen und
- die Datenverarbeitungseinheit (14) dazu eingerichtet ist, um:
∘ einen Parameter abzuleiten, der den Status des Objekts (22A,22B) auf der Basis der von dem Beschleunigungssensor (12) erhaltenen Bewegungsdaten beschreibt,
**dadurch gekennzeichnet, dass** die Verarbeitungseinheit außerdem dazu eingerichtet ist, um
∘ eine Schwingungsperiode der Vorrichtung (10A,10B) auf der Basis der von dem Beschleunigungssensor (12) gemessenen Beschleunigungsdaten zu berechnen und um
∘ die vertikale Abweichung des beweglichen Objektes (22A,22B) gemäß einer mathematischen Pendelformel des beweglichen Objektes (22A,22B) zu berechnen, wobei die vertikale Abweichung zu dem Durchhang des beweglichen Objektes (22A,22B) vergleichbar ist.

2. Vorrichtung (10A,10B) nach Anspruch 1, **dadurch gekennzeichnet, dass** sie dazu eingerichtet ist, in einen Energie sparenden Bereitschaftsmodus zu gehen, und weiterhin, um in bestimmten Intervallen aufzuwachen, um die Messungen auszuführen oder wenn der Sensor einen ausreichenden kinetischen Zustand detektiert.

3. Vorrichtung (10A,10B) nach einem der vorstehenden Ansprüche, **dadurch gekennzeichnet, dass** sie Mittel zur Befestigung der Vorrichtung an der elektrischen Leitung umfasst.

4. Vorrichtung (10A,10B) nach Anspruch 2, **dadurch gekennzeichnet, dass** sie Mittel aufweist, um Betriebsenergie für die Vorrichtung von der elektrischen Leitung zu erhalten, vorzugsweise induktiv und optional außerdem Mittel zum Aufladen der Betriebsenergie.

5. Vorrichtung (10A,10B) nach einem der vorstehenden Ansprüche, **dadurch gekennzeichnet, dass** die Kommunikationsmittel dazu eingerichtet sind, um ein Mobilfunknetzwerk zu benutzen.

6. Vorrichtung (10A,10B) nach einem der vorstehenden Ansprüche, **dadurch gekennzeichnet, dass** die Kommunikationsmittel dazu eingerichtet sind, um mit einer anderen entsprechenden Vorrichtung zu kommunizieren, um die Parameter, die den Zustand des Objektes (22A,22B) beschreiben, in einer Kette von einer Vorrichtung zu einer anderen entsprechenden Vorrichtung weiterzuleiten.

7. Vorrichtung (10A,10B) nach einem der vorstehenden Ansprüche, **dadurch gekennzeichnet, dass** der Sensor ein 3-D Beschleunigungssensor (12) ist, der dazu eingerichtet ist, um die Position der Vorrichtung zu erkennen, so dass die von dem Sensor gelieferten Messdaten dazu verwendet werden, um die Richtung der Beschleunigungskomponente der Erdgravitation festzustellen.

8. System zur Überwachung des Durchhangs von zellen- oder netzwerkartigen Objekten (22A,22B), beispielsweise elektrischen Leitungen, wobei das System umfasst
- ein Kontrollzentrum,
- eine Mehrzahl von entfernten Vorrichtungen (10A,10B), die mit den Zellen oder Teilen des Netzwerkes des Objektes (22A,22B) verbunden und dazu eingerichtet sind, um lokal deren Zustand zu überwachen und die Zustandsdaten drahtlos zu dem Kontrollzentrum zu übermitteln,
**dadurch gekennzeichnet, dass** die Vorrichtungen (10A,10B) nach einem der Ansprüche 1 bis 7 als entfernte Vorrichtungen verwendet werden.

9. System nach Anspruch 8, **dadurch gekennzeichnet, dass** das Kontrollzentrum eine Datenbank umfasst, die die geographischen Orte der Mehrzahl von entfernten Vorrichtungen enthält.

10. Verfahren zur Überwachung des Durchhangs von zellen-oder netzwerkartigen Objekten (22A,22B), in dem Verfahren
- messen des kinetischen Zustandes oder der Änderung des kinetischen Zustandes des Objektes (22A,22B) mittels einer entfernten Vorrichtung (10A,10B),
- ableiten eines Parameters, der den Zustand des Objektes (22A,22B) auf der Basis der Messdaten beschreibt,
- den Parameter, der den Zustand des Objektes (22A,22B) beschreibt, zumindest teilweise drahtlos an das Kontrollzentrum übermitteln,
**gekennzeichnet durch** die Verwendung einer Vorrichtung (10A,10B) nach einem der Ansprüche 1 bis 7 als entfernte Vorrichtung.

11. Verfahren nach Anspruch 10, **dadurch gekennzeichnet, dass**
- die entfernte Vorrichtung (10A,10B) verwendet wird, um die Querbeschleunigung der elektrischen Leitungen im Wind zu detektieren,
- ein mit dem Leitungsdurchhang der elektrischen Leitung vergleichbarer Parameter auf der Basis der Querbeschleunigung berechnet wird, und dass
- der mit dem Leitungsdurchhang vergleichbare Parameter drahtlos zu dem Kontrollzentrum übermittelt wird.

12. Verfahren nach Anspruch 10 oder 11, **dadurch gekennzeichnet, dass**
- eine Mehrzahl von entfernten Vorrichtungen (10A,10B) verwendet werden, die an unterschiedlichen Teilen, wie zum Beispiel einer Anzahl von Zwischenräumen zwischen Masten, des Objektes (22A,22B) angeordnet sind, und dass
- der Parameter, der den Zustand des Objektes (22A,22B) beschreibt, von der Mehrzahl von entfernten Vorrichtungen an das Kontrollzentrum übermittelt wird.

13. Verfahren nach Anspruch 10, 11 oder 12, **gekennzeichnet durch** die Verwendung einer 3-D Beschleunigungsmessung, um die Position zu messen, so dass die Richtung der von der Erdgravitation verursachten Beschleunigungskomponente aus den von dem Sensor erzeugten Messdaten festgestellt wird.

## Revendications

1. Appareil (10A, 10B) pour surveiller la flèche d'objets mobiles (22A, 22B), en particulier des lignes électriques d'un réseau électrique, l'appareil (10A, 10B) pouvant être fixé à l'objet (22A, 22B) à surveiller et comprenant :
- un capteur d'accélération (12),
- une unité de traitement de données (14) connectée en service au capteur d'accélération (12) et
- des moyens de communication pour relayer sans fil des données provenant de l'unité de traitement de données (14) vers l'extérieur de l'appareil (10A, 10B),
- le capteur d'accélération (12) étant aménagé pour reconnaître le mouvement ou le changement de mouvement de l'appareil (10A, 10B) et
- l'unité de traitement de données (14) étant agencée pour :
• déduire un paramètre décrivant l'état de l'objet (22A, 22B) sur la base des données de mouvement obtenues auprès du capteur d'accélération (12), **caractérisé en ce que** l'unité de traitement est en outre aménagée pour :
• calculer une période d'oscillation de l'appareil (10A, 10B) sur la base des données d'accélération mesurées par le capteur d'accélération (12) et pour
• calculer la déviation verticale de l'objet mobile (22A, 22B) selon une formule de pendule mathématique de l'objet mobile (22A, 22B), laquelle déviation verticale est comparable à la flèche de l'objet mobile (22A, 22B).

2. Appareil (10A, 10B) selon la revendication 1, **caractérisé en ce qu'**il est aménagé pour passer en mode de réserve économisant de l'énergie et se réveiller en outre pour effectuer la mesure à certains intervalles ou quand le capteur détecte un état cinétique suffisant.

3. Appareil (10A, 10B) selon l'une quelconque des revendications précédentes, **caractérisé en ce qu'**il comprend des moyens pour fixer l'appareil à la ligne électrique.

4. Appareil (10A, 10B) selon la revendication 2, **caractérisé en ce qu'**il comprend des moyens pour obtenir de l'énergie d'exploitation pour l'appareil en provenance de la ligne électrique, de préférence par voie inductrice, et éventuellement également des moyens pour charger l'énergie d'exploitation.

5. Appareil (10A, 10B) selon l'une quelconque des revendications précédentes, **caractérisé en ce que** les moyens de communication sont agencés pour utiliser un réseau téléphonique cellulaire.

6. Appareil (10A, 10B) selon l'une quelconque des revendications précédentes, **caractérisé en ce que** les moyens de communication sont agencés pour communiquer avec un autre appareil correspondant pour relayer le paramètre décrivant l'état de l'objet (22A, 22B) dans une chaîne allant d'un appareil à un autre appareil correspondant.

7. Appareil (10A, 10B) selon l'une quelconque des revendications précédentes, **caractérisé en ce que** le capteur est un capteur d'accélération 3D (12) aménagé pour reconnaître la position de l'appareil de sorte que les données de mesure fournies par le capteur soient utilisées pour déterminer la direction de la composante d'accélération de la pesanteur terrestre.

8. Système de surveillance de la flèche d'objets de type cellule ou réseau (22A, 22B), tels que des lignes électriques, le système comprenant :
- un centre de commande,
- une pluralité d'appareils distants (10A, 10B) fixés aux cellules ou aux parties du réseau de l'objet (22A, 22B) et agencés pour surveiller localement leur état et relayer les données d'état sans fil vers le centre de commande,
**caractérisé en ce que** les appareils (10A, 10B) selon l'une quelconque des revendications 1 à 7 sont utilisés comme appareils distants.

9. Système selon la revendication 8, **caractérisé en ce que** le centre de commande comprend une base de données contenant les emplacements géographiques de ladite pluralité des appareils distants.

10. Procédé de surveillance de la flèche d'objets de type cellule ou réseau (22A, 22B), dans lequel procédé :
- on mesure l'état cinétique ou le changement d'état cinétique de l'objet (22A, 22B) au moyen d'un appareil distant (10A, 10B),
- on déduit un paramètre décrivant l'état de l'objet (22A, 22B) sur la base des données de mesure,
- on relaie le paramètre décrivant l'état de l'objet (22A, 22B) au moins en partie sans fil vers le centre de commande,
**caractérisé en ce que** l'on utilise un appareil (10A, 10B) selon l'une quelconque des revendications 1 à 7 comme appareil distant.

11. Procédé selon la revendication 10, **caractérisé en ce que** :
- l'appareil distant (10A, 10B) est utilisé pour détecter l'accélération transversale de la ligne électrique dans le vent,
- un paramètre comparable à la flèche de la ligne électrique est calculé sur la base de l'accélération transversale et
- le paramètre comparable à la flèche de la ligne est relayé sans fil vers le centre de commande.

12. Procédé selon la revendication 10 ou 11, **caractérisé en ce que** :
- une pluralité d'appareils distants (10A, 10B) aménagés dans différentes parties de l'objet (22A, 22B), telles que le nombre d'espacements entre des pylônes, est utilisée et
- le paramètre décrivant l'état de l'objet (22A, 22A) est relayé de ladite pluralité d'appareils distants vers le centre de commande.

13. Procédé selon la revendication 10, 11 ou 12, **caractérisé par** l'utilisation d'une mesure d'accélération 3D pour mesurer la position de sorte que la direction de la composante d'accélération provoquée par la pesanteur terrestre soit déterminée à partir des données de mesure produites par le capteur.
